# FASCICULE DE BREVET EUROPEEN

(11) **EP 2 030 514 B1**
(45) Date de publication et mention de la délivrance du brevet: **12.10.2011**
(21) Numéro de dépôt: 08358008.4
(22) Date de dépôt: 22.08.2008
(51) Int. Cl.: A23N 15/02, A01D 46/28, B07B 13/05

(54) **Egrappoir linéaire à mouvements oscillants alternatifs**
Abbeermaschine mit hin- und hergehenden oszillierenden Bewegungen
Stalk separator with reciprocating oscillating movements

(30) Priorité: 30.08.2007 FR 0706084
(43) Date de publication de la demande: 04.03.2009
(73) Titulaire: PELLENC (Société Anonyme), 84120 Pertuis (FR)
(72) Inventeur: Pellenc, Roger, 84120 Pertuis (FR); Gialis, Jean-Marc, 84460 Cheval Blanc (FR)
(74) Mandataire: Nuss, Laurent

(56) Documents cités:
- EP-A- 0 826 959
- FR-A- 2 516 755
- US-A- 1 835 889
- US-A- 3 886 858
- "TRIEURS EMBARQUES", LA VIGNE, no. 200, July 2008 (2008-07), page 34,

## Description

La présente invention concerne un égrappoir ou « érafloir » linéaire à mouvements oscillants alternatifs.

Plus précisément, elle vise un égrappoir pour l'égrenage de petits fruits récoltés en grappes, en particulier pour l'égrenage des grappes de raisin.

Dans la majorité des procédés de vinification mis en oeuvre, le raisin est d'abord égrappé avant l'encuvage de la vendange. Cette opération a pour but de détacher les baies des grappes de raisin et de séparer ainsi les dites baies des rafles auxquelles elles se trouvent attachées, et, de la sorte, d'éviter la présence d'amertume et de goûts herbacés et végétaux dans le vin.

On connaît différents types d'appareils permettant l'égrenage des petits fruits se présentant sous forme de grappes, en particulier de grappes de raisin.

Dans le document FR- 2 669 193, est par exemple décrit un égrappoir séparateur-trieur de vendange comprenant un tambour cylindrique rotatif, à axe horizontal ou peu incliné, ce tambour tournant étant muni de perforations de sorte à former un tamis propre à laisser passer les baies détachées des rafles par l'action d'un hérisson monté rotatif dans ledit tambour et constitué par un arbre sur lequel se trouve fixés des batteurs radiaux implantés hélicoïdalement le long dudit arbre.

Le tambour et le hérisson tournent dans le même sens à des vitesses différentes, ou dans des sens opposés. Cette rotation permet de séparer les grains des rafles. Les grappes sont introduites à l'une des extrémités du tambour, les grains et le jus passent à travers les perforations du tambour et les rafles sont éjectées à l'autre extrémité de celui-ci.

Dans le document EP- 1 002 467, est décrite une machine destinée notamment à égrener les grains de raisin, constituée par un égreneur linéaire ou plan comprenant, d'une part, un tapis sans fin à claire-voie sur lequel est transportée la vendange à égrapper et, d'autre part, une succession de hérissons (généralement trois ou quatre dans les machines réalisées selon ce document) disposés transversalement au-dessus dudit tapis. Ces hérissons tournent à une vitesse proportionnelle à la vitesse d'avancement du tapis à claire-voie. Ces deux mouvements ont pour effet de séparer les grains des rafles. Les grains et le jus passent à travers le crible constitué par le tapis à claire-voie, tandis que les rafles sont éjectées en bout dudit tapis.

Les dispositifs décrits dans les deux documents susmentionnés présentent plusieurs inconvénients majeurs, notamment :
- un écrasement excessif des baies qui produit du jus ;
- un encombrement relativement important ;
- une complexité constructive ;
- un coût élevé ;
- une fiabilité limitée.

On connaît aussi (FR-2.511.849 et 2.516.755) une machine à égrapper la vendange, opérant par brassage de celle-ci sur une grille oscillante, au moyen de doigts de brassage disposés sur le trajet de la vendange et animés d'un mouvement de va-et-vient dans le sens transversal.

Une telle machine a pour inconvénient, outre un faible débit, de réaliser une trituration de la vendange qui nuit à la séparation et à l'élimination des débris divers contenus dans celle-ci (fragments de feuilles, petits morceaux de bois, pétioles, petits insectes, ...) en raison de la consistance poisseuse de la récolte triturée.

Le document EP 0 826 959 a pour objet une machine à vendanger comprenant un dispositif secoueur permettant de détacher les grappes de raisins des ceps de vigne lors de la vendange et étant disposé au-dessus du brin inférieur d'un convoyeur élévateur constitué par une succession de godets ou récipients s'effaçant au passage des ceps de vigne, lesdits godets étant destinés à recueillir les grappes de raisins récoltées.

La présente invention propose un égrappoir selon la revendication 1 exempt des inconvénients ci-dessus, pour l'égrenage de petits fruits cueillis en grappes, après leur récolte mécanisée ou manuelle, en particulier pour l'égrenage de grappes de raisin détachées des ceps de vigne, et une machine de récolte selon la revendication 10, comprenant un tel égrappoir.

Cette machine comporte une bande transporteuse et un dispositif égreneur disposé au-dessus de cette bande transporteuse. Elle est notamment remarquable en ce que le dispositif égreneur est constitué par au moins deux ensembles de détachement de baies, espacés et disposés en vis à vis, ces ensembles comprenant, chacun, une pluralité de bras séparateurs superposés et par des moyens moteurs permettant de communiquer un mouvement oscillatoire à haute fréquence auxdits ensembles de bras séparateurs superposés.

Selon une autre disposition caractéristique, les moyens d'entraînement de l'ensemble ou de chaque ensemble oscillant de bras ou batteurs superposés sont configurés pour communiquer à ces derniers, un mouvement oscillatoire de fréquence comprise entre 5 et 30 hertz.

Selon une disposition avantageuse, les bras séparateurs des ensembles oscillants opposés, sont animés d'un même mouvement angulaire, parallèle ou approximativement parallèle, en cours de fonctionnement.

Selon une autre disposition caractéristique, les ensembles oscillants du dispositif égreneur sont séparés par un espace, la largeur de cet espace correspondant approximativement à la largeur de la bande transporteuse, à l'entrée dudit dispositif, cet espace se resserrant ensuite en direction de la sortie de ce dernier.

Selon une autre disposition caractéristique, l'égrappeur selon l'invention comprend un dispositif ameneur accompagnant la vendange lors de son passage entre les ensembles égreneurs.

Selon une autre disposition caractéristique, la bande transporteuse est constituée par un tapis à claire-voie.

Les buts, caractéristiques et avantages ci-dessus, et d'autres encore, ressortiront mieux de la description qui suit et des dessins annexés dans lesquels :
La figure 1 est une vue en perspective d'un exemple de réalisation de l'égrappoir selon l'invention.
La figure 2 est une vue en perspective d'un ensemble de bras séparateurs oscillants.
La figure 3A est une vue en perspective d'un premier mode de réalisation de l'un des bras séparateurs oscillants de cet ensemble.
La figure 3B est une vue en perspective d'un deuxième mode d'exécution d'un tel bras.

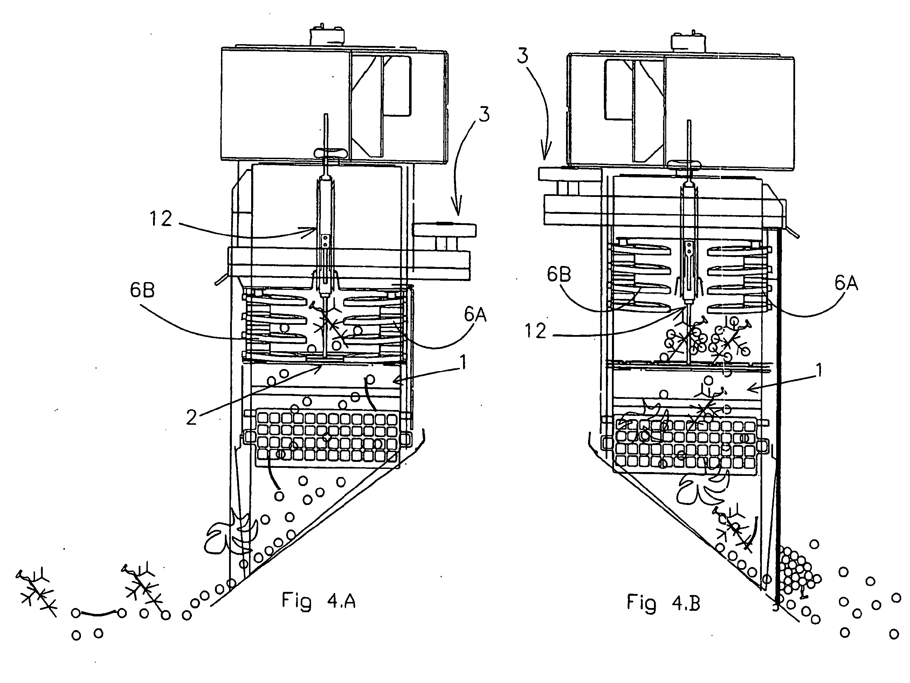

La figure 4A est une vue arrière de l'égrappeur montré en situation de fonctionnement, tandis que la figure 4B est une vue analogue représentant ledit égrappeur en position débrayée.
Les figures 5A-5D sont des vues en plan, à caractère schématique, illustrant le mouvement oscillant alternatif des bras séparateurs : - la figure 5A montre la superposition des différentes positions, - la figure 5B montre l'une des positions extrêmes, - la figure 5C représente la position médiane, - la figure 5D illustre l'autre position extrême.

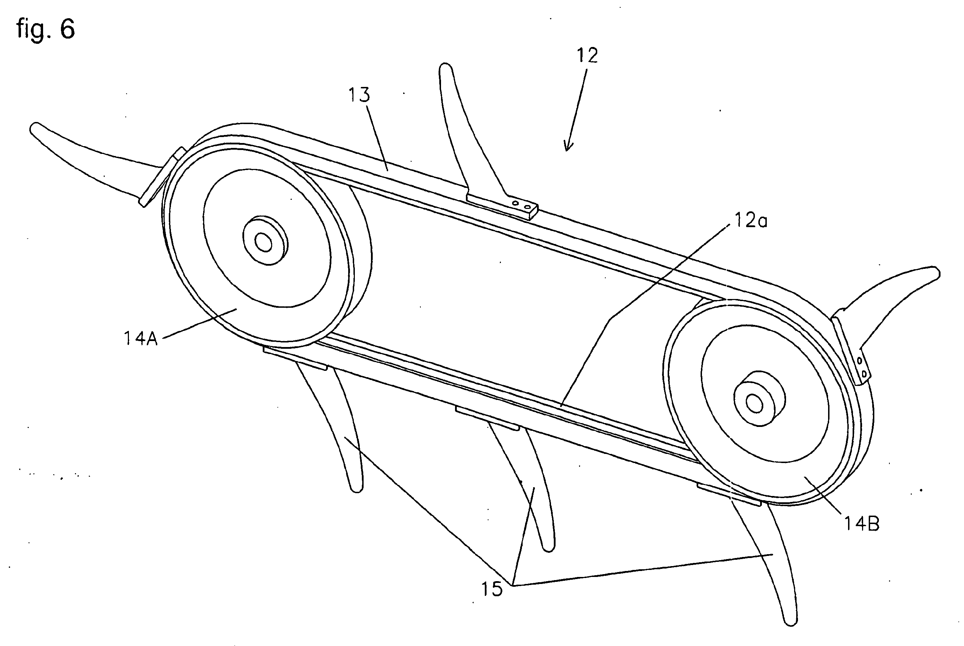

La figure 6 est une vue en perspective d'un exemple de réalisation de l'ameneur auxiliaire.
La figure 7 est une vue en perspective du système d'animation des ensembles égreneurs.
La figure 8 est une vue de côté d'un exemple de réalisation de l'égrappoir qui comporte une bande transporteuse à claire-voie et une trémie d'alimentation.
La figure 9 est une vue de côté montrant l'installation de l'égrappoir sur une machine à vendanger.
La figure 10 est une vue de dessus de cette machine.
La figure 11 est une vue arrière de la machine à vendanger représentée aux figures 9 et 10.

On se reporte auxdits dessins pour décrire un exemple intéressant, quoique nullement limitatif, de réalisation de l'égrappoir linéaire à mouvements oscillants alternatifs selon l'invention.

Cet égrappoir comprend essentiellement :
- une bande transporteuse 1 ;
- au moins un dispositif égreneur 2, et
- des moyens d'animation 3 de ce dispositif égreneur ou de chaque dispositif égreneur 2.

De préférence et avantageusement, la bande transporteuse 1 est constituée par une bande convoyeuse à claire-voie, par exemple du genre décrit dans le document FR-2 795 599. Une telle bande ou tamis transporteur est constituée par une pluralité de palettes à claire-voie 4 montées les unes à la suite des autres, chacune de ces palettes comprenant un barreau frontal par l'intermédiaire duquel elle est rattachée, avec une aptitude de pivotement, aux chaînes latérales sans fin 5 du tamis transporteur 1, lesdites palettes pivotantes présentant, dans une direction perpendiculaire à leur barreau transversal, une longueur déterminée pour qu'elles se trouvent en appui, par l'intermédiaire de leur bord postérieur sur le barreau transversal de la palette suivante, en prenant une position proche de l'horizontale, lorsqu'elles constituent le brin supérieur 1A du tamis transporteur, tandis que lorsqu'elles appartiennent au brin inférieur 1 B de ce dernier, elles pendent en position verticale, de sorte que ledit brin inférieur 1 B présente des mailles ou ouvertures très agrandies.

Un dispositif égreneur 2 est disposé au-dessus du tamis convoyeur, de préférence au-dessus de la portion médiane de ce dernier.

Selon une importante disposition caractéristique de l'invention, cet égreneur est constitué par au moins deux ensembles de détachement de baies, séparés par un espace vertical et disposés en vis-à-vis, ces ensembles 6A, 6B, comprenant, chacun, une pluralité de bras séparateurs 6 superposés, et par des moyens moteurs 3 permettant de communiquer un mouvement oscillatoire à haute fréquence à chacun desdits ensembles de bras séparateurs 6.

Selon un mode d'exécution avantageux, chaque bras séparateur 6 est constitué par une tige flexible rigide ou semi-rigide en forme d'épingle à cheveux à branches de longueurs inégales, de sorte à présenter une forme d'ellipse aplatie constituée d'une portion active frontale 6a et d'une portion arrière 6b. L'extrémité de la portion arrière 6b est fixée rigidement à un arbre vertical mobile 7 permettant de lui communiquer des mouvements oscillatoires, tandis que l'extrémité recourbée 6c de la portion frontale 6a est fixée, avec une liberté de pivotement ou non, sur un arbre vertical fixe 8.

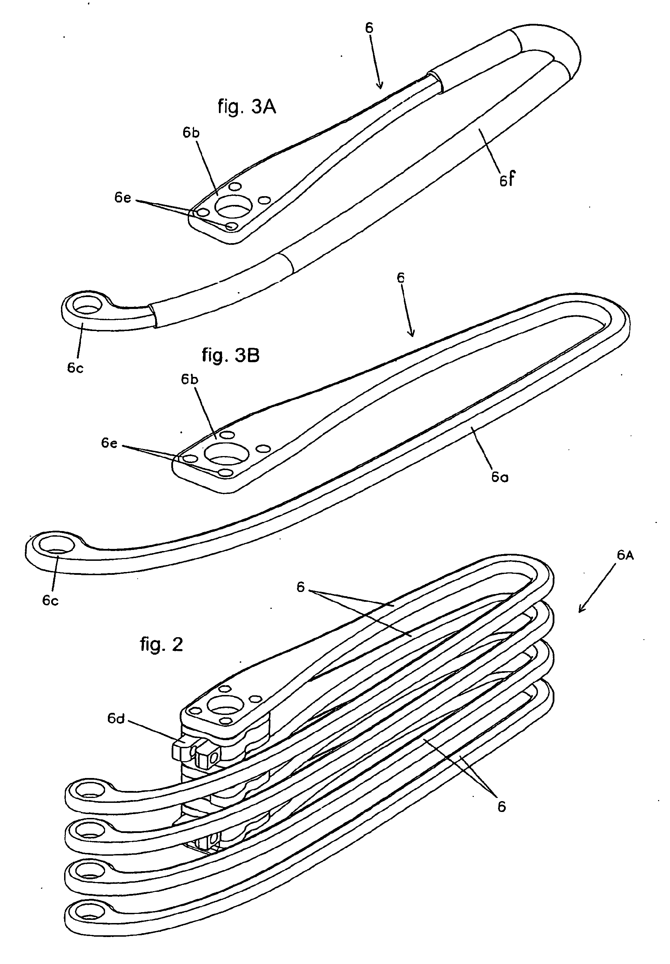

Les bras séparateurs 6 peuvent être exécutés en tous matériaux flexibles rigides ou semi-rigides tels que, par exemple, matières plastiques (polyamide 66 ou autre), fibres de carbone, fibres de résine aramide (Kevlar : marque déposée), acier, inox, titane ou mélange de plusieurs de ces matériaux. Leur section peut aussi être très diverse, par exemple circulaire, carrée ou rectangulaire, hexagonale, pleine ou creuse, tubulaire ou cylindrique. Leur forme ou profil peut être sensiblement elliptique, comme illustré, ou linéaire ou autre. La portion active frontale 6a des bras séparateurs 6 peut être avantageusement revêtue d'une couche de matière souple 6f (par exemple d'une couche de polyuréthanne) rapportée par surmoulage ou autrement (figure 3A).

Les bras séparateurs superposés 6 constituant chacun des deux ensembles opposés 6A, 6B du système d'égrenage, peuvent être assemblés avec des entretoises d'espacement 6d, ou par l'intermédiaire de vis traversant des trous 6e que présente leur extrémité 6b ou au moyen d'une technique de surmoulage connue en soi.

Les ensembles 6A, 6B de bras séparateurs 6 sont disposés face à face et sont mis en mouvement de pivotement alternatif par l'intermédiaire de l'arbre mobile 7 solidaire en rotation de l'extrémité 6b desdits bras séparateurs 6. L'autre extrémité 6c de ces derniers peut être reliée avec une aptitude de libre pivotement, ou fixement, à l'arbre 8. Eventuellement, les deux arbres 7 et 8 pourraient être animés d'un mouvement de rotation alternative.

Les ensembles de bras séparateurs 6A, 6B sont fixés sur les arbres mobiles 7 par bridage, emmanchement à force, surmoulage ou autrement.

Selon une autre disposition caractéristique, les moyens d'entraînement 3 de l'ensemble ou des ensembles oscillants de bras séparateurs superposés 6A, 6B, sont choisis et configurés pour communiquer, à ces derniers, un mouvement oscillatoire de fréquence comprise entre 5 et 30 hertz.

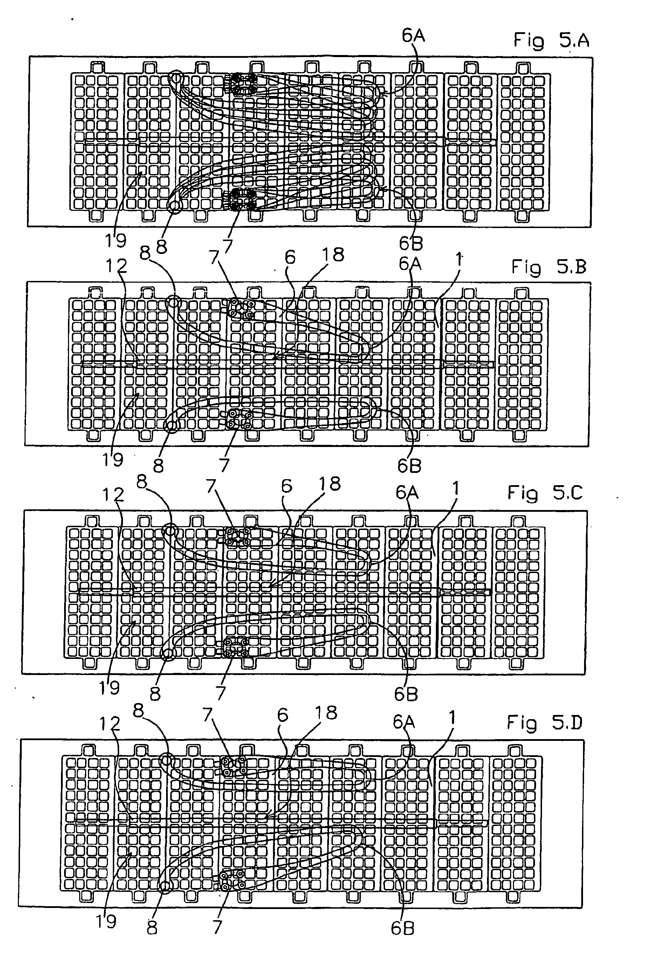

D'autre part, selon une autre disposition avantageuse, les bras séparateurs 6 des ensembles oscillants opposés 6A, 6B, sont animés d'un même mouvement angulaire parallèle ou approximativement parallèle, en cours de fonctionnement. Ce mouvement est illustré aux figures 5A à 5D.

La figure 5B montre l'une des positions extrêmes des ensembles de bras séparateurs 6A et 6B. La figure 5C montre la position médiane de ces ensembles de bras séparateurs, tandis que la figure 5D illustre la position extrême opposée de ces derniers. Ces trois positions sont représentées, en superposition sur la figure 5A.

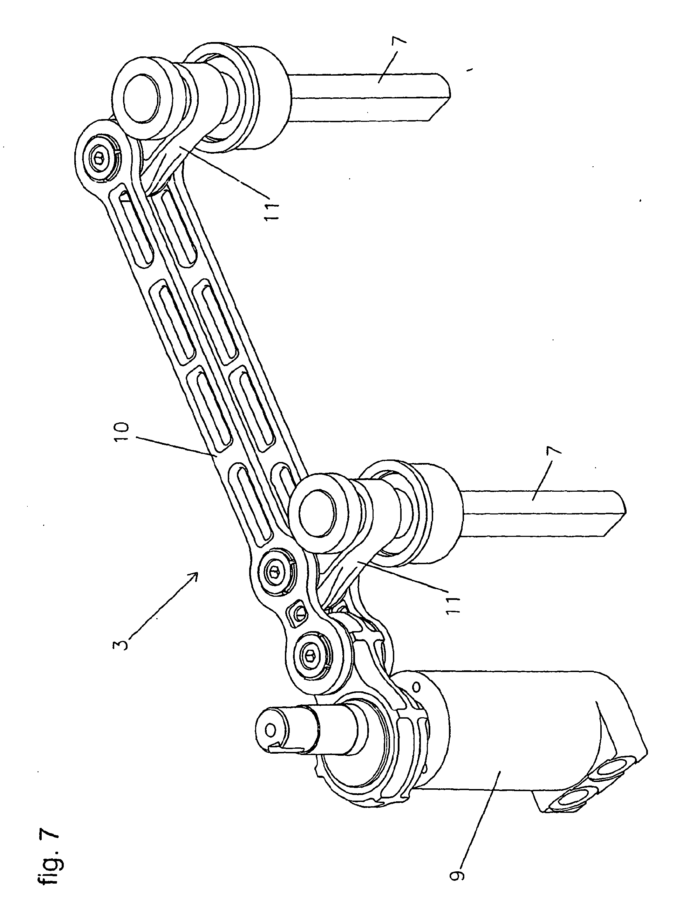

On a représenté, à la figure 7, un exemple de réalisation des moyens d'entraînement 3 des ensembles de bras séparateurs oscillants 6A, 6B du dispositif égreneur. Ce système d'animation 3 comprend un actionneur 9 relié aux arbres mobiles 7 par une bielle 10 et des biellettes 11. L'actionneur 9 peut être d'un type linéaire ou rotatif, hydraulique, électrique ou autre. Il peut être relié aux arbres oscillants 7 par toute transmission convenable, par exemple constituée par un système de bielle manivelle, de pignon-cremaillère ou de deux vérins en opposition.

Les ensembles de bras séparateurs 6A, 6B, sont séparés par un espace ou couloir vertical 18, comme on peut le voir sur les figures 5B à 5D. A l'entrée 19 du dispositif égreneur 6A-6B, cet espace présente une largeur L correspondant approximativement à la largeur de la bande transporteuse 1 ; il se resserre ensuite en direction de la sortie dudit dispositif égreneur, de façon à constituer une sorte d'entonnoir permettant de canaliser les grappes transportées par ladite bande, et aussi d'obtenir un égrenage progressif des grappes au fur et à mesure de l'avancement de la récolte.

Selon une autre disposition caractéristique, l'égrappoir selon l'invention comprend encore un dispositif ameneur 12 dont la fonction est de compléter l'action de convoyage de la bande transporteuse 1, pour faire avancer la vendange entre les ensembles oscillants 6A, 6B du dispositif égreneur.

Ce dispositif ameneur peut être constitué par un système d'actionneur rotatif qui met en mouvement un ou des poussoirs qui peuvent être réalisés en matière plastique, en acier, ou en fibres de carbone, ou de verre, ou de résine aramide, ..., fixés sur une chaîne de type CG, une chaîne de manutention à maillons souples et barreaux, etc. Selon l'exemple représenté, il est constitué d'une pluralité de doigts courbes espacés 15, fixés sur une courroie trapézoïdale 13 s'enroulant sur deux poulies 14A, 14B dont l'une est motrice et qui peut être entraînée en rotation par tout système de motorisation convenable. Les poussoirs 15 circulent entre les ensembles égreneurs 6A, 6B lorsqu'ils appartiennent au brin inférieur 12a de l'ameneur 12.

On conçoit bien le fonctionnement de l'égrappoir selon l'invention.

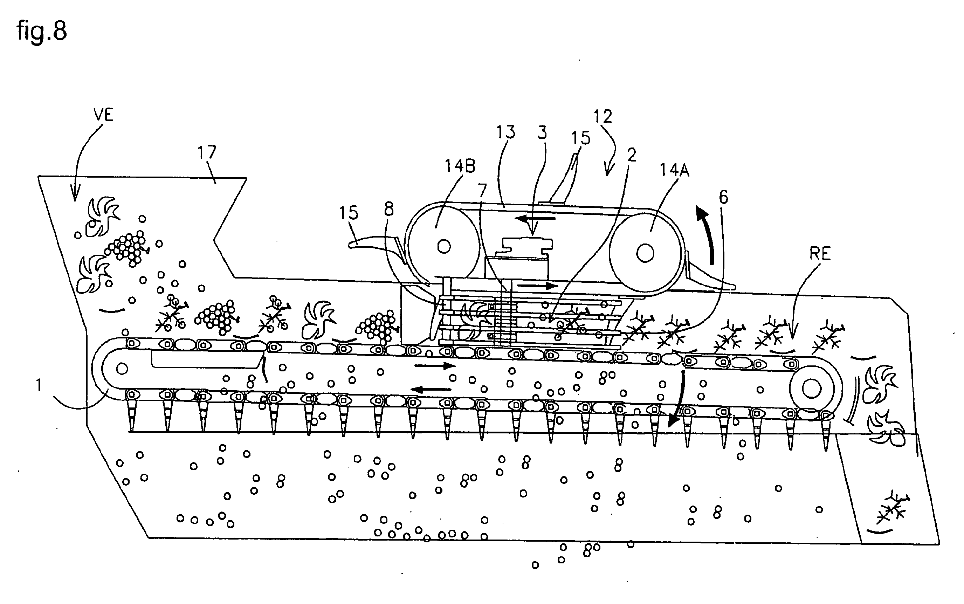

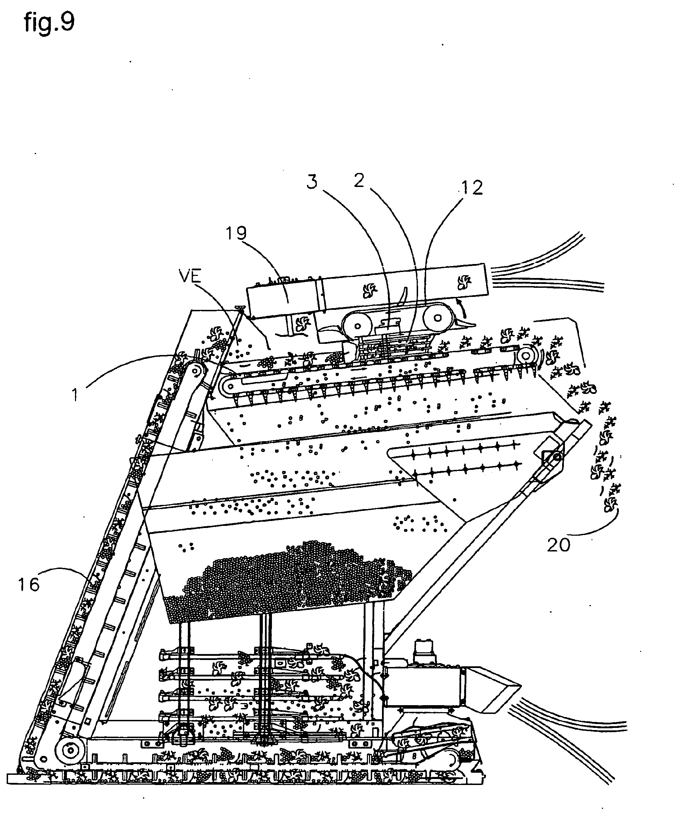

La vendange VE provenant d'une machine à vendanger ou de vendange manuelle est déversée à l'état brut ou après une opération de tri permettant d'éliminer les feuilles et autres éléments indésirables, sur la portion amont du brin supérieur 1A de la bande transporteuse à claire-voie 1, par exemple par un convoyeur élévateur 16 (figure 9) ou par une trémie 17 qui peut former un ensemble compact avec l'égrappoir comme représenté sur la figure 8.

La portion amont du tapis transporteur à claire-voie 1 permet, en premier lieu, d'extraire le jus et les baies déjà détachées des rafles.

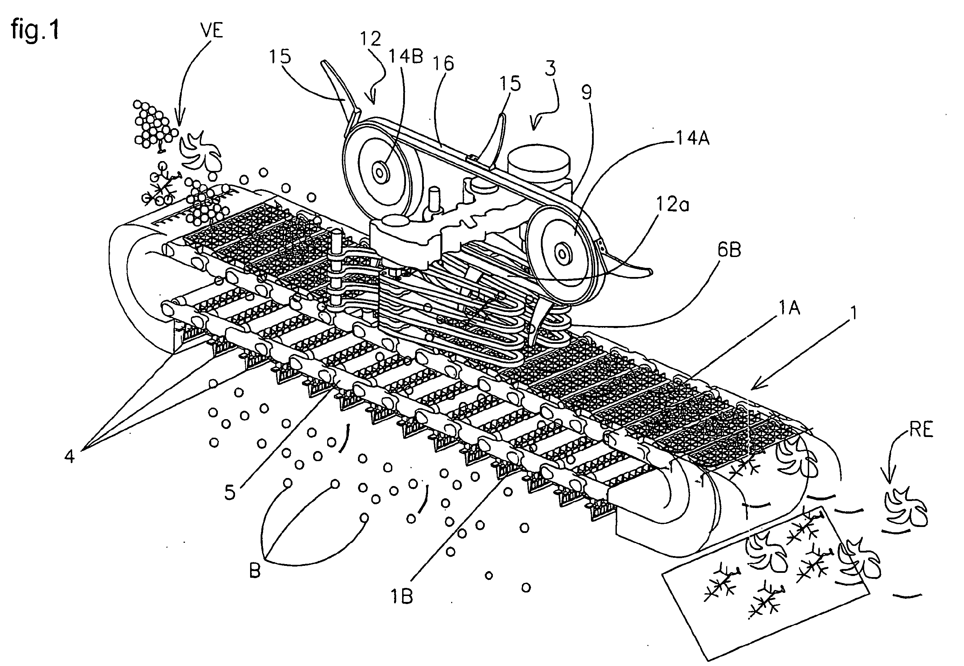

La vendange ainsi allégée et rendue moins volumineuse, est ensuite conduite par le tamis convoyeur constitué par la bande transporteuse à claire-voie 1, et avec l'aide de l'ameneur 12, jusqu'au dispositif égreneur 2 et canalisée entre les ensembles de bras séparateurs oscillants 6A-6B de ce dernier. Sous l'action des bras séparateurs 6 desdits ensembles oscillants, les baies B sont détachées des rafles et tombent à travers les mailles du tamis convoyeur 1 et sont récupérées au-dessus de celui-ci. Les rafles et autres éléments indésirables RE sont éjectées à la sortie du tamis convoyeur (figures 1 et 8).

Selon un autre mode d'exécution comprenant un tapis transporteur non ajouré, les baies détachées et les rafles sont évacuées ensemble en bout de tapis et font ensuite l'objet d'une opération de tri manuelle ou automatisée.

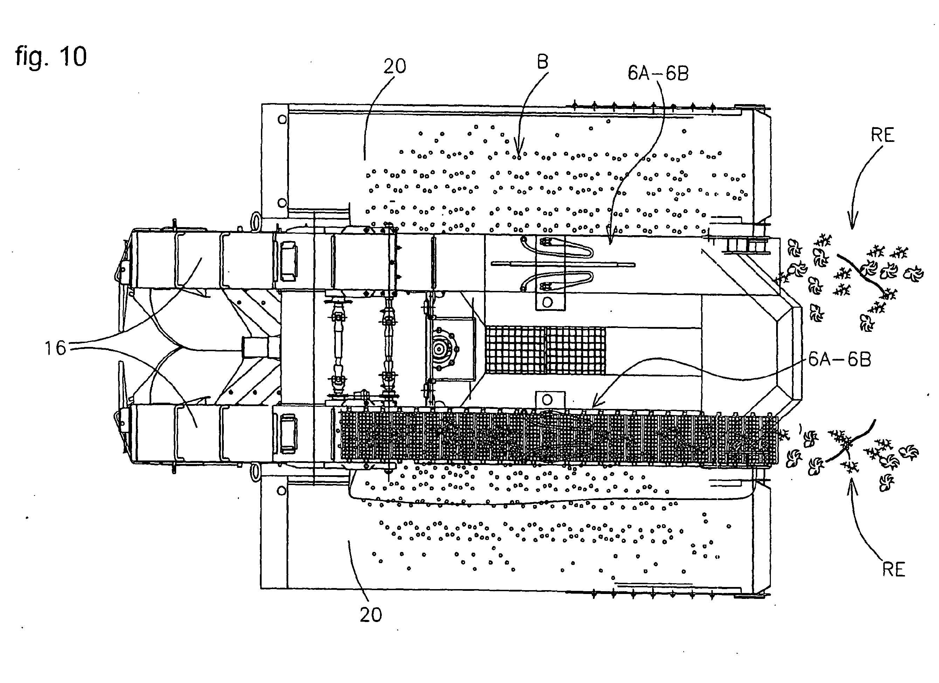

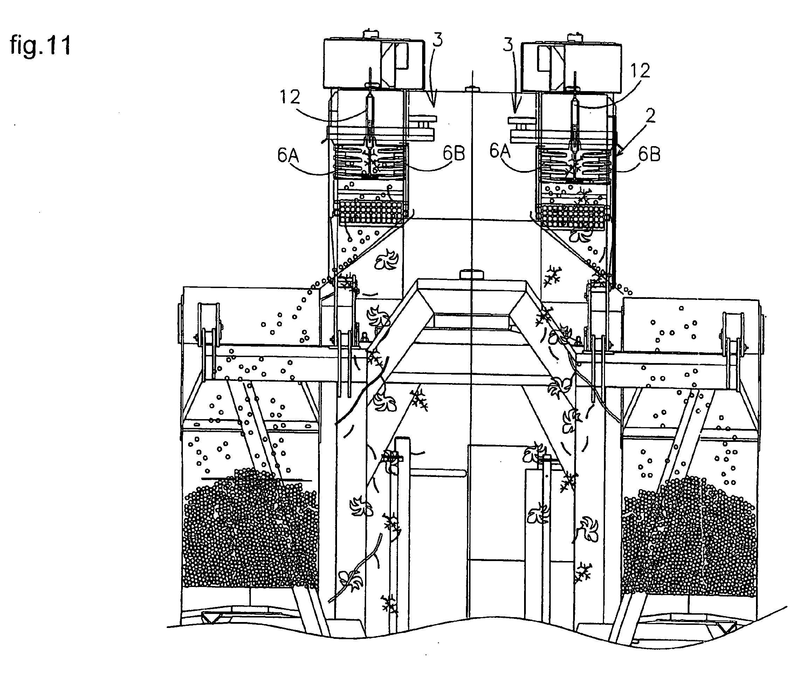

L'égrappoir selon l'invention peut être embarqué sur une machine à vendanger ou machine de récolte analogue, comme illustré par les figures 9 à 11, ou installé en cave ou autre local de réception de la vendange.

Sur les figures 9 à 11, les références ci-après désignent les organes suivants de la machine à vendanger illustrée sur laquelle est embarqué l'égrappoir 1-2 selon l'invention :
- 16 : convoyeur élévateur
- 18 : dispositif de récolte
- 19 : aspirateur éjecteur de feuilles
- 20 : bennes de réception des baies B détachées des rafles.

L'invention concerne également les machines à vendanger équipées d'un égrappoir comportant les caractéristiques susmentionnées et installé en aval de son ou de ses convoyeurs élévateurs 16.

## Revendications

1. Egrappoir pour l'égrenage de petits fruits cueillis en grappes après leur récolte mécanisée ou manuelle en particulier pour l'égrenage de grappes de raisin détachées des ceps de vigne, du genre comportant une bande transporteuse (1) et un dispositif égreneur (2) disposé au-dessus de cette bande transporteuse, **caractérisé en ce que** le dispositif égreneur est constitué par au moins deux ensembles de détachement des baies (6A, 6B) desdites grappes récoltées, disposés en vis-à-vis et séparés par un espace vertical (18), ces ensembles comprenant, chacun, une pluralité de bras ou batteurs séparateurs superposés (6) et des moyens moteurs (3) permettant de communiquer un mouvement oscillatoire à haute fréquence auxdits ensembles de bras séparateurs superposés (6A, 6B).

2. Egrappoir linéaire à mouvements oscillants alternatifs, selon la revendication 1, **caractérisé en ce que** la bande transporteuse (1) est constituée par un tapis à claire-voie.

3. Egrappoir linéaire à mouvements oscillants alternatifs selon l'une des revendications 1 ou 2, **caractérisé en ce que** les bras séparateurs superposés (6) des ensembles oscillants (6A, 68), sont animés d'un mouvement angulaire parallèle ou approximativement parallèle, en cours de fonctionnement.

4. Egrappoir linéaire à mouvements oscillants alternatifs suivant l'une quelconque des revendications 1 à 3, **caractérisé en ce que** les moyens d'entraînement des ensembles oscillants (6A, 6B) de bras séparateurs superposés (6) sont configurés pour communiquer un mouvement oscillatoire de fréquence comprise entre 5 et 30 hertz, auxdits ensembles.

5. Egrappoir linéaire à mouvements oscillants alternatifs selon l'une quelconque des revendications 1 à 4, **caractérisé en ce que** les bras séparateurs (6) sont constitués par une tige flexible en forme d'épingle à cheveux à branches de longueurs inégales, chaque bras séparateur comportant ainsi une portion active frontale (6a) et une portion arrière (6b) et étant fixé par l'intermédiaire
de ses extrémités à des arbres verticaux (7, 8) dont l'un au moins permet de communiquer un mouvement oscillatoire audit bras séparateur (6).

6. Egrappoir linéaire à mouvements oscillants alternatifs, selon la revendication 5, **caractérisé en ce que** la portion frontale active (6a) des bras séparateurs (6) est revêtue d'une couche de matière souple (6f).

7. Egrappoir linéaire à mouvements oscillants alternatifs suivant l'une quelconque des revendications 1 à 6 **caractérisé en ce que** les ensembles oscillants (6A, 6B) du dispositif égreneur (2) sont séparés par un espace ou couloir vertical (18), la largeur (L) de cet espace ou couloir (18) correspondant approximativement à la largeur de la bande transporteuse (1), à l'entrée dudit dispositif (2), cet espace se resserrant ensuite en direction de la sortie de ce dernier.

8. Egrappoir linéaire à mouvements oscillants alternatifs, selon l'une quelconque des revendications 1 à 7, **caractérisé en ce qu'**il comprend un dispositif ameneur (12) accompagnant la vendange lors de son passage entre les ensembles oscillants de bras séparateurs (6A, 6B).

9. Egrappoir linéaire à mouvements oscillants alternatifs, suivant la revendication 8, **caractérisé en ce que** ledit dispositif ameneur (12) comprend un ou plusieurs poussoirs (15) fixé(s) sur une courroie (13) s'enroulant sur deux poulies (14A, 14B) dont l'une est motrice, les poussoirs (15) appartenant au brin inférieur (12a) du dispositif ameneur sans fin (12) circulant entre les ensembles de bras séparateurs (6A, 6B).

10. Machine de récolte de petits fruits se présentant en grappes, en particulier machine à vendanger, **caractérisée en ce qu'**elle comprend un égrappoir selon l'une quelconque des revendications 1 à 9, installé en aval de son ou de ses convoyeurs élévateurs (16).

## Claims

1. Stalk separator for picking off small fruits gathered in bunches after the mechanical or manual harvesting thereof, in particular for picking off grapes from the stalks of grape vines, of the type comprising a conveyor belt (1) and a picking off device (2) arranged above said conveyor belt, **characterised in that** the picking off device is formed by at least two assemblies for the removal of the fruits (6A, 6B) of said harvested bunches, arranged opposite one another and separated by a vertical space (18), wherein said assemblies each comprise a plurality of superimposed separating arms or beaters (6) and drive units (3) for communicating a high frequency oscillatory movement to said assemblies of superimposed separating arms (6A, 6B).

2. Linear stalk separator with reciprocating oscillating movements according to claim 1, **characterised in that** the conveyor belt (1) is formed by an open-work mat.

3. Linear stalk separator with reciprocating oscillating movements according to one of claims 1 or 2, **characterised in that** the superimposed separating arms (6) of the oscillating assemblies (6A, 6B) are driven by a parallel or approximately parallel angular movement during operation.

4. Linear stalk separator with reciprocating oscillating movements according to any one of claims 1 to 3, **characterised in that** the drive means of the oscillating assemblies (6A, 6B) of superimposed separating arms (6) are configured to communicate an oscillating movement with a frequency of between 5 and 30 hertz to said assemblies.

5. Linear stalk separator with reciprocating oscillating movements according to any one of claims 1 to 4, **characterised in that** the separating arms (6) are formed by a flexible rod in the form of a hairpin with branches of unequal length, wherein each separating arm thus comprises an active front portion (6a) and a rear portion (6b) and is fixed by means of its ends to vertical shafts (7, 8), at least one of which enables the communication of an oscillatory movement to said separating arm (6).

6. Linear stalk separator with reciprocating oscillating movements according to claim 5, **characterised in that** the active front portion (6a) of the separating arms (6) is covered by a layer of flexible material (6f).

7. Linear stalk separator with reciprocating oscillating movements according to any one of claims 1 to 6, **characterised in that** the oscillating assemblies (6A, 6B) of the picking off device (2) are separated by a space or vertical channel (18), wherein the width (L) of said space or channel (18) corresponds approximately to the width of the conveyor belt (1), at the entry of said device (2), wherein said space then narrows in the direction of the output of the latter.

8. Linear stalk separator with reciprocating oscillating movements according to any one of claims 1 to 7, **characterised in that** it comprises a conveying device (12) accompanying the grape harvest during its passage between the oscillating assemblies of separating arms (6A, 6B).

9. Linear stalk separator with reciprocating oscillating movements according to claim 8, **characterised in that** said conveying device (12) comprises one or more tappets (15) fixed onto a belt (13) which rolls on two blocks (14A, 14B) one of which is driven, wherein the tappets (15) belong to the lower strand (12a) of the continuous drive device (12) circulating between the assemblies of separating arms (6A, 6B).

10. Machine for harvesting small fruits which are in bunches, in particular a grape harvesting machine, **characterised in that** it comprises a stalk separator according to any one of claims 1 to 9, installed downstream of its elevating conveyor or conveyors (16).

## Patentansprüche

1. Abbeermaschine zum Abbeeren kleiner Früchte, die nach ihrer mechanisierten oder manuellen Ernte in Trauben gepflückt sind, insbesondere zum Abbeeren von Weintrauben, die von Weinstöcken abgetrennt sind, vom Typ umfassend ein Förderband (1) und eine Abbeerungsvorrichtung (2), die über diesem Förderband angeordnet ist, **dadurch gekennzeichnet, dass** die Abbeerungsvorrichtung von mindestens zwei Einheiten (6A, 6B) zum Ablösen von Beeren der besagten geernteten Trauben gebildet ist, die sich gegenüberliegend angeordnet und durch einen vertikalen Raum (18) getrennt sind, wobei diese Einheiten jeweils eine Vielzahl von übereinander angeordneten Trennarmen (6) oder Trennschlägern und Antriebsmittel (3) aufweisen, die es ermöglichen, eine Oszillationsbewegung hoher Frequenz auf die besagten Einheiten der übereinander angeordneten Trennarme (6A, 6B) weiterzuleiten.

2. Lineare Abbeermaschine mit hin- und hergehenden Oszillationsbewegungen nach Anspruch 1, **dadurch gekennzeichnet, dass** das Förderband (1) von einem Lattenband gebildet ist.

3. Lineare Abbeermaschine mit hin- und hergehenden Oszillationsbewegungen nach einem der Ansprüche 1 oder 2, **dadurch gekennzeichnet, dass** die übereinander angeordneten Trennarme (6) der oszillierenden Einheiten (6A, 6B) zu einer parallelen oder annähernd parallelen Winkelbewegung während des Betriebs angetrieben sind.

4. Lineare Abbeermaschine mit hin- und hergehenden Oszillationsbewegungen nach einem der Ansprüche 1 bis 3, **dadurch gekennzeichnet, dass** die Antriebsmittel der oszillierenden Einheiten (6A, 6B) der übereinander angeordneten Trennarme (6) derart ausgeführt sind, dass sie eine Oszillationsbewegung mit einer Frequenz zwischen 5 und 30 Hertz auf die Einheiten weiterleiten.

5. Lineare Abbeermaschine mit hin- und hergehenden Oszillationsbewegungen nach einem der Ansprüche 1 bis 4, **dadurch gekennzeichnet, dass** die Trennarme (6) von einer biegsamen Stange in Form einer Haarnadel mit Schenkeln von ungleicher Länge gebildet sind, wobei jeder Trennarm auf diese Weise einen vorderen aktiven Abschnitt (6a) und einen hinteren Abschnitt (6b) umfasst und mit seinen Enden an vertikalen Wellen (7, 8) befestigt ist, von denen es mindestens eine ermöglicht, eine Oszillationsbewegung auf den besagten Trennarm (6) weiterzuleiten.

6. Lineare Abbeermaschine mit hin- und hergehenden Oszillationsbewegungen nach Anspruch 5, **dadurch gekennzeichnet, dass** der aktive vordere Abschnitt (6a) der Trennarme (6) mit einer Schicht aus weichem Material (6f) überzogen ist.

7. Lineare Abbeermaschine mit hin- und hergehenden Oszillationsbewegungen nach einem der Ansprüche 1 bis 6, **dadurch gekennzeichnet, dass** die oszillierenden Einheiten (6A, 6B) der Abbeerungsvorrichtung (2) durch einen vertikalen Raum oder Gang (18) getrennt sind, wobei die Breite (L) dieses Raums oder Ganges (18) annähernd der Breite des Förderbandes (1) am Eingang der Vorrichtung (2) entspricht, wobei dieser Raum dann in Richtung des Ausgangs dieser letztgenannten enger wird.

8. Lineare Abbeermaschine mit hin- und hergehenden Oszillationsbewegungen nach einem der Ansprüche 1 bis 7, **dadurch gekennzeichnet, dass** sie eine Zuführvorrichtung (12) umfasst, die die Ernte bei ihrem Durchlaufen der oszillierenden Einheiten der Trennarme (6A, 6B) begleitet.

9. Lineare Abbeermaschine mit hin- und hergehenden Oszillationsbewegungen nach Anspruch 8, **dadurch gekennzeichnet, dass** die Zuführvorrichtung (12) einen oder mehrere Schieber (15) umfasst, die auf einem Riemen (13) angeordnet sind, der um zwei Rollen (14A, 14B) gewickelt ist, von denen eine ein Antrieb ist, wobei die Schieber (15), die dem unteren Abschnitt (12a) der endlosen Zuführvorrichtung (12) angehören, zwischen den Einheiten (6A, 6B) der Trennarme umlaufen.

10. Maschine zum Ernten kleiner Früchte, die in Form von Trauben vorhanden sind, insbesondere Weinlesemaschine, **dadurch gekennzeichnet, dass** sie eine Abbeermaschine nach einem der Ansprüche 1 bis 9 umfasst, die stromabwärts zu ihrem oder ihren Hubband(bändern) (16) angeordnet ist.
